# EUROPÄISCHE PATENTANMELDUNG

(11) **EP 2 361 705 A1**
(43) Veröffentlichungstag der Anmeldung: **31.08.2011**
(21) Anmeldenummer: 11152908.7
(22) Anmeldetag: 01.02.2011
(51) Int. Cl.: B22F 3/105, B29C 67/00, B05B 5/00

(54) **Verfahren und Vorrichtung zum Verbinden von Partikeln mit einem Substrat**

(30) Priorität: 23.02.2010 DE 102010002259
(71) Anmelder: Robert Bosch GmbH, 70442 Stuttgart (DE)
(72) Erfinder: Kroetz, Harry, 70197, Stuttgart (DE)

(57) **Zusammenfassung**

Die vorliegende Erfindung betrifft ein Verfahren zum Verbinden von Partikeln (8) mit einem Substrat (2). Das Verfahren umfasst die Schritte der Einstellung einer elektrischen Potentialdifferenz U zumindest eines Partikels (8) relativ zu dem Substrat (2) und der Kontaktierung des zumindest einen Partikels (8) mit dem Substrat (2). Dabei entsteht ein Entladungsstrom, der zu einem Stoffschluss des Partikels (8) mit dem Substrat (2) führt. Die Erfindung betrifft weiterhin eine Vorrichtung zur Durchführung des erfindungsgemäßen Verfahrens.

## Beschreibung

Die vorliegende Erfindung betrifft ein Verfahren und eine Vorrichtung zum Befestigen von Partikeln mit einem Substrat zur Herstellung von dreidimensionalen Körpern, insbesondere zur Herstellung von dreidimensionalen Körpern nach dem Verfahren des rapid prototyping.

### Stand der Technik

Aus DE 103 06 886 A1 ist ein Verfahren und eine Vorrichtung zur schichtweisen Herstellung eines dreidimensionalen Körpers bekannt. Die Verfahrensschritte umfassen,
a) das elektrische Entladen von Partikeln mittels ionisierter Teilchen, damit die Partikel desagglomeriert werden,
b) das Ausbringen einer Partikelschicht auf eine darunterliegende Partikelschicht,
c) die Verklebung der Partikeln miteinander und mit der darunterliegenden Schicht.

Nachteilig an einem derartigen Verfahren ist, dass ein durch ein derartiges Verfahren hergestellter dreidimensionaler Körper zu unstabil ist.

Die Aufgabe der Erfindung ist es, ein Verfahren und eine Vorrichtung zu schaffen, mit dem stabilere dreidimensionale Körper hergestellt werden können.

Offenbarung der Erfindung

Die Aufgabe der Erfindung wird durch das Verfahren des Anspruchs 1 und die Vorrichtung des Anspruchs 8 gelöst. Anspruch 1 beschreibt ein Verfahren zum Verbinden von Partikeln mit einem Substrat. Die Verfahrensschritte umfassen die Einstellung einer elektrischen Potentialdifferenz zumindest eines Partikels relativ zu dem Substrat und die Kontaktierung des zumindest einen Partikels mit dem Substrat, so dass ein Entladungsstrom zu einem Stoffschluss des Partikels mit dem Substrat führt.

Durch den Entladungsstrom wird unter anderem das Partikel und insbesondere der Kontaktpunkt zwischen dem Partikel und dem Substrat erwärmt. Erreicht die Erwärmung eine Schmelztemperatur des Partikels, dann geht das Partikel mit dem Substrat einen Stoffschluss ein. Vorteilhaft dabei ist, dass das Partikel an jeder Stelle des Substrats kontaktiert werden kann. Wird anstelle eines Partikels eine Vielzahl an Partikeln für das erfindungsgemäße Verfahren verwendet, eignet sich das Verfahren insbesondere zum rapid prototyping, bei dem eine schnelle Herstellung von Musterbauteilen ausgehend von Konstruktionsdaten erfolgt. Ferner wird durch den Stoffschluss eine stärkere Verbindung zwischen den Partikeln erreicht, als durch andere Verbindungsarten, so dass durch das erfindungsgemäße Verfahren insbesondere ein solides Bauteil hergestellt werden kann.

Das Partikel kann jede geeignete Ausgestaltung aufweisen. Bevorzugt ist jedoch ein kugelförmiges Partikel. Ferner kann das Partikel aus jedem Material hergestellt sein, das zumindest auf seiner Oberfläche elektrisch leitend ist. Bevorzugt sind jedoch Weichmetalle wie zum Beispiel Aluminium, Blei, Kupfer oder Legierungen aus Metallen bzw. Weichmetallen. Weichmetalle und deren Legierungen weisen für Metalle eine besonders niedrige Schmelztemperatur auf. Dadurch ist eine kleinere Temperaturerhöhung und somit ein kleinerer Entladungsstrom notwendig um eine stoffschlüssige Verbindung zwischen dem Partikel und dem Substrat herzustellen als bei Verwendung von Hartmetallen. Ferner sind Materialkombinationen wie zum Beispiel eine Legierung möglich. Die Legierung kann aus Weichmetallen und/oder Hartmetallen bestehen. Ferner kann jedes Partikel eine unterschiedliche Zusammensetzung aufweisen. Beispielsweise können die ersten Partikeln aus einem Weichmetall und die darauffolgenden Partikeln können vorzugsweise aus einem Hartmetall sein, damit das Bauteil leichter von dem Substrat getrennt werden kann.

Als Substrat wird insbesondere jedes elektrisch leitende Material bezeichnet, einschließlich des elektrisch leitenden Materials, an dem das zumindest eine Partikel kontaktiert wurde. Das Substrat kann beispielsweise aus dem gleichen Material ausgebildet sein, wie das Partikel. Dadurch kommt ein homogener Stoffschluss zwischen dem Substrat und dem Partikel zustande. Das Substrat kann auch zumindest an einer dem Partikel zugewandten Seite aus einem anderen elektrisch leitenden Material ausgebildet sein als das Partikel, damit sich das Partikel leicht von dem Substrat lösen lässt.

Eine Potentialdifferenz des Partikels relativ zu dem Substrat wird vorzugsweise durch das Anlegen einer Spannung erreicht. Dadurch wird auf einfache Weise elektrische Ladung von dem Partikel zum Substrat oder umgekehrt transportiert. Die Potentialdifferenz wird so hoch eingestellt, dass der Entladungsstrom zwischen dem Partikel und dem Substrat zu einem Stoffschluss des Partikels mit dem Substrat führt.

Grundsätzlich kann das Partikel auf jede geeignete Weise mit dem Substrat in Kontakt gebracht werden. Beispielsweise kann das Partikel aufgrund der Schwerkraft und/oder der Coulomb-Kraft, die aufgrund der Potentialdifferenz zwischen dem Partikel und dem Substrat entsteht, in Richtung des Substrats beschleunigt werden. Bevorzugt ist jedoch, dass das Partikel durch die Schwerkraft und durch die Coulomb-Kraft, zum Substrat hin beschleunigt wird. Durch Addition der beiden Kräfte wird das Partikel schneller auf dem Substrat platziert und weniger durch die Umgebungsluft abgelenkt.

Der Stoffschluss umfasst alle Verbindungen, die durch atomare oder molekulare Kräfte zusammengehalten werden. Eine stoffschlüssige Verbindung kann beispielsweise durch Löten, Entladungsschweißen insbesondere Widerstandsschweißen bzw. Punktschweißen erfolgen. Vorzugsweise kommt der Stoffschluss zwischen dem Partikel und das Substrat durch Schweißen zustande, da Schweißen einer der stärksten Verbindungsarten ohne zusätzlichen Materialverbrauch ist.

Vorzugsweise geht so lange ein weiteres Partikel mit dem Substrat einen Stoffschluss ein, bis eine Lage aus Partikeln ausgebildet ist. Eine Lage aus Partikeln ist bevorzugt eine Schicht aus Partikeln, die vorzugsweise eben ausgebildet ist, wobei die Schichtdicke vorzugsweise so groß ist wie der Durchmesser eines Partikels. Die Schicht besteht vorteilhafterweise aus miteinander verbundenen Partikeln, wobei besonders bevorzugt die Partikel-Schicht parallel zu einer Substrat-Oberfläche angeordnet ist. Werden in der Partikelschicht gezielt einzelne Partikel weggelassen, dann wird eine zweidimensionale Struktur auf dem Substrat erzeugt. Dadurch kann eine vordefinierte Struktur auf einer leitenden Oberfläche ausgebildet werden. Sind die Partikel im Mikrometer-Bereich dimensioniert, kann eine Mikrostrukturierung erzeugt werden, die mit bloßem Auge nicht erkennbar ist.

Besonders bevorzugt geht so lange ein weiteres Partikel mit dem Substrat einen Stoffschluss ein, bis eine vordefinierte dreidimensionale Form ausgebildet ist. Die dreidimensionale Form besteht aus Partikeln, die jeweils mittels Stoffschluss miteinander verbunden sind. Dadurch können Aufbauten auf elektrisch leitenden Oberflächen ausgebildet werden, die stabil sind und über eine feine Struktur verfügen. Ist die Strukturierung im Mikrometer-Bereich entstehen Mikroaufbauten, die mit bloßem Auge nicht erkennbar sind.

Vorteilhafterweise weist das Partikel einen mittleren Durchmesser d von 0,1 µm ≤ *d* ≤ 1000 µm auf. Bevorzugt ist jedoch ein mittlerer Partikel-Durchmesser d von 0,5 µm ≤ *d* ≤ 100 µm und besonders bevorzugt ist ein mittlerer Partikel-Durchmesser d von 1 µm ≤ *d* ≤ 10 µm. Je kleiner der Partikel-Durchmesser desto feiner die mögliche Struktur des zu erzeugenden Gebildes. Je größer der Partikel-Durchmesser, desto größer die elektrische Kapazität und desto größer der Entladungsstrom des Partikels. Der ideale Partikel-Durchmesser hängt also unter anderem vom Schmelzpunkt, der elektrischen Leitfähigkeit und der elektrischen Kapazität des Materials ab, wobei die elektrische Kapazität unter anderem vom Durchmesser d des Partikels abhängt. Die definierten Bereiche des PartikelDurchmessers sind so gewählt, dass das Partikel abhängig vom Material ausreichend elektrische Ladung in sich trägt, um einen Entladungsstrom zu erzeugen, der so groß ist, dass eine stoffschlüssige Verbindung des Partikels mit dem Substrat erfolgen kann. Gleichzeitig kann der mittlere Partikel-Durchmesser d in den definierten Bereichen bevorzugt so gewählt werden, dass eine Feinstruktur beim Formen von dreidimensionalen Gebilden entsteht.

Geeignet ist jede Potentialdifferenz, die zu einem Stoffschluss des Partikels mit dem Substrat führt. Vorteilhaft beträgt die Potentialdifferenz in Abhängigkeit der Partikelgröße zumindest 100 V, bevorzugt zumindest 1000 V und besonders bevorzugt zumindest 10000 V. Zum Beispiel kann die elektrische Potentialdifferenz U einen Bereich von 100 V ≤ *U* ≤100.000 V aufweisen. Der Entladungsstrom, der bei dem Kontakt zwischen dem Partikel und dem Substrat fließt, hängt von der Potentialdifferenz U des Partikels relativ zu dem Substrat ab. Je größer die Potentialdifferenz zwischen dem Partikel und dem Substrat, desto größer der Entladungsstrom des Partikels bei einem Kontakt mit dem Substrat. Bevorzugt wird das Partikel höher als die oben definierten Mindestpotentialdifferenzen eingestellt, wobei die Mindestpotentialdifferenzen vom Material des Partikels abhängen.

In einer vorteilhaften Ausgestaltung der Erfindung umfasst das erfindungsgemä-βe Verfahren weiterhin den Schritt der Erwärmung des zumindest einen Partikels vor der Kontaktierung mit dem Substrat. Dadurch ist eine kleinere Temperaturerhöhung und somit ein kleinerer Entladungsstrom zum stoffschlüssigen Verbinden des Partikels mit dem Substrat notwendig. Die Erwärmung des zumindest einen Partikels muss dabei insbesondere unterhalb der Schmelztemperatur ausgestaltet sein. Dadurch ist eine kleinere Temperaturerhöhung und somit ein kleinerer Entladungsstrom notwendig, um das Partikel mit dem Substrat stoffschlüssig zu verbinden, als ohne die zusätzliche Erwärmung des Partikels.

Vorzugsweise umfasst das erfindungsgemäße Verfahren weiterhin den Schritt vor der Kontaktierung mit dem Substrat die Position des zumindest einen Partikels entlang zumindest einer Koordinatenachse zu variieren. Dies erleichtert eine präzise Positionierung des Partikels auf dem Substrat. Insbesondere kann die Position des zumindest einen Partikels entlang aller drei Koordinatenachsen x, y und z variiert werden. Dadurch kann das Partikel, beispielsweise mittels eines vorprogrammierten Rechners, zur Ausbildung eines zweidimensionalen oder dreidimensionalen Gebildes aus Partikeln benutzt werden.

Die Erfindung betrifft weiterhin eine Vorrichtung zur Durchführung des erfindungsgemäßen Verfahrens, umfassend eine Spannungsquelle mit einer ersten Elektrode zum direktem oder indirektem elektrischen Kontaktieren zumindest eines Partikels und einer zweiten Elektrode, die mit einem Substrat kontaktiert ist, wobei das zumindest eine Partikel eine Potentialdifferenz relativ zu dem Substrat aufweist. Dabei führt die Entladung des Partikels bei Kontakt mit dem Substrat zu einem Stoffschluss zwischen dem Partikel und dem Substrat.

Als direktes elektrisches Kontaktieren wird vorzugsweise die physische Berührung zwischen dem mindestens einen Partikel und der ersten Elektrode bezeichnet. Als indirektes elektrisches Kontaktieren wird bevorzugt das Kontaktieren eines Partikels mittels zumindest eines anderen Partikels mit der ersten Elektrode verstanden, so dass ein elektrischer Strom fließen kann.

Als Spannungsquelle kann jede Art von Spannungsquelle verwendet werden, die aufgrund der angelegten Spannung zwischen dem Partikel und dem Substrat eine Potentialdifferenz aufbauen kann. Bevorzugt ist jedoch eine gleichgerichtete Spannungsquelle. Noch bevorzugter ist eine Hochspannungsquelle.

Vorzugsweise ist ein Vorratsbehälter zum Aufnehmen des zumindest einen Partikels vorgesehen. In einem Vorratsbehälter kann das zumindest eine Partikel aufbewahrt werden. Der Vorratsbehälter kann jede geeignete Form aufweisen. Bevorzugt ist jedoch ein hohlzylinderförmiger Vorratsbehälter, insbesondere mit einem verengten Austrittsbereich. Vorzugsweise ist der Vorratsbehälter entlang zumindest einer Koordinatenachse, bevorzugt entlang aller drei Koordinatenachsen x, y und z bewegbar ausgebildet. Dies erleichtert das präzise Positionieren des Vorratsbehälters relativ zu dem Substrat. Außerdem kann ein entlang allen drei Koordinaten x, y und z bewegbarer Vorratsbehälter, zum Beispiel mittels eines vorprogrammierten Rechners, zur Ausbildung eines zweidimensionalen oder dreidimensionalen Gebildes aus Partikeln benutzt werden.

Besonders bevorzugt ist die erste Elektrode der Spannungsquelle als zumindest ein Teil der Innenwand des Vorratsbehälters ausgebildet. Vorzugsweise ist die erste Elektrode der Spannungsquelle als die gesamte Innenwand des Vorratsbehälters ausgebildet. Dadurch kann das zumindest eine Partikel bereits in dem Vorratsbehälter aufgeladen werden, ohne dass eine Außenwand des Vorratsbehälters ebenfalls elektrisch aufgeladen werden muss. Die erste Elektrode ist bevorzugt als eine elektrisch leitende Metallplatte, welche die Innenwand des Vorratsbehälters zumindest zu einem Teil bedeckt, ausgebildet. Dadurch stehen die in dem Vorratsbehälter aufbewahrten Partikel entweder direkt oder indirekt durch andere Partikel mit der ersten Elektrode in elektrischem Kontakt.

Vorteilhafterweise weist der Vorratsbehälter Mittel auf, um die Menge der aus dem Vorratsbehälter austretenden Partikel zu regulieren. Bevorzugt weist der Vorratsbehälter hierfür eine veränderliche Austrittsöffnung auf. Durch eine veränderliche Austrittsöffnung des Vorratsbehälters kann die Anzahl der Partikeln, die den Vorratsbehälter in einem bestimmten Zeitabschnitt verlassen, bis auf eins reduziert werden. Dadurch wird eine maximale Präzision der Vorrichtung erreicht. Die Austrittsöffnung des Vorratsbehälters kann aber auch so geöffnet sein, dass mehrere Partikel innerhalb eines Zeitabschnitts den Vorratsbehälter verlassen. Dabei stoßen sich die geladenen Partikeln bevorzugt aufgrund ihrer Coulomb-Kraft ab und verhindern ein Verklumpen. Außerdem wird dadurch eine große Ausbreitungsfläche der Partikeln auf dem Substrat erreicht.

Weiterhin umfasst die Vorrichtung eine Heizvorrichtung zur Erwärmung des zumindest einen Partikels. Die Heizvorrichtung kann das zumindest eine Partikel nach dem Verlassen des Vorratsbehälters und vor dem Kontaktieren des Substrats erwärmen. Beispielsweise kann dies durch einen Laser oder durch eine Flamme geschehen. Die Heizvorrichtung kann das zumindest eine Partikel aber auch bereits im Vorratsbehälter erwärmen. Dazu wird der Vorratsbehälter bevorzugterweise mit Heizdrähten umwickelt, die bevorzugt aus der Spannungsquelle gespeist werden. Bevorzugt wird die Spannungsquelle sowohl zum Aufbauen der Potentialdifferenz zwischen dem Partikel und dem Substrat als auch zum Heizen der Partikel verwendet.

Vorzugsweise ist der Vorratsbehälter entlang zumindest einer Koordinatenachse bewegbar ausgebildet ist. Der Vorratsbehälter kann aber auch entlang aller drei Koordinatenachsen bewegbar ausgebildet sein. Dadurch kann der Vorratsbehälter das zumindest eine Partikel entlang mehrerer Koordinatenachsen relativ zu dem Substrat positioniert werden. Dadurch kann beispielsweise ein vorprogrammierter Rechner den Vorratsbehälter in eine bestimmte Position relativ zu dem Substrat bringen und auf diese Weise das zumindest eine Partikel mit dem Substrat kontaktieren, so dass eine vordefinierte zweidimensionale oder dreidimensionale Struktur aus Partikeln auf dem Substrat entsteht.

Im Folgenden wir ein Ausführungsbeispiel der erfindungsgemäßen Vorrichtung zur Durchführung des erfindungsgemäßen Verfahrens dargestellt.

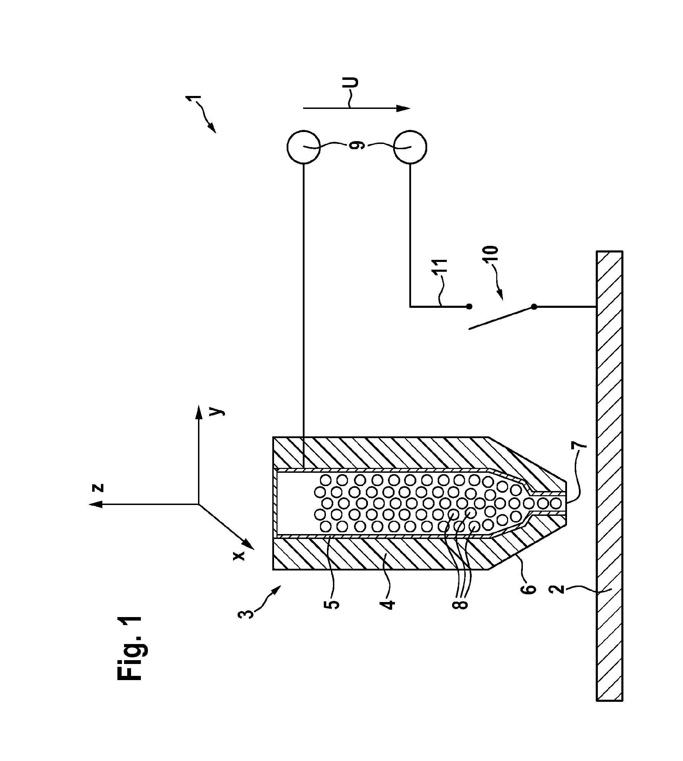

- Fig. 1:: Vorrichtung zum Verbinden von Partikeln mit einem Substrat.

Eine erfindungsgemäße Vorrichtung 1 umfasst einen Substrat 2, welches beispielsweise aus Aluminium besteht, und einen Vorratsbehälter 3. Der Vorratsbehälter 3 ist hohlzylinderförmig ausgebildet, wobei die Längsachse des Vorratsbehälters 3 senkrecht zur Substrat-Oberfläche 2 angeordnet ist. Weiterhin umfasst der Vorratsbehälter 3 eine Außenwand 4, die beispielsweise aus wärmeisolierendem Kunststoff besteht, und eine Innenwand 5, die beispielsweise aus einer Kupferplatte besteht. In Richtung des Substrats 2 weist der Vorratsbehälter 3 einen verengten Bereich auf, der eine Austrittsöffnung 7 aufweist. Die Austrittsöffnung 7 weist einen Durchmesser größer dem Partikeldurchmesser, beispielsweise von 5 µm, auf und ist mittels eines vorprogrammierten Rechners in ihrem Durchmesser regulierbar. Innerhalb der Innenwand 5 befindet sich eine Vielzahl an Partikel 8, die beispielsweise von einer der Austrittsöffnung 7 entgegengesetzten Richtung in den Vorratsbehälter 3 eingefüllt werden und durch die verschlossene Austrittsöffnung 7 am Austreten aus dem Vorratsbehälter 3 gehindert werden. Die Partikel sind 8 kugelförmig ausgebildet und bestehen beispielsweise ebenfalls aus Aluminium. Ferner weisen die Partikel 8 beispielsweise einen Durchmesser d von ca. 5 µm auf. Die Innenwand 5 des Vorratsbehälters 3 ist als eine erste Elektrode einer gleichgerichteten Hochspannungsquelle 9 ausgebildet. Die zweite Elektrode 11 der Hochspannungsquelle 9 ist mit einem Schalter 10 elektrisch verbunden, wobei der Schalter 10 wiederum mit dem Substrat 2 elektrisch verbunden ist. Ferner kann der Vorratsbehälter 3 durch den vorprogrammierten Rechner entlang aller drei Koordinatenachsen x, y und z bewegt werden.

Wird die Hochspannungsquelle 9 eingeschaltet und der Schalter 10 geschlossen, dann entsteht eine Potentialdifferenz U zwischen der Innenwand 5 des Vorratsbehälters 3 und dem Substrat 2. Da die Partikel 8 elektrische Leiter sind und entweder direkt beziehungsweise indirekt mittels anderer Partikel 8 mit der Innenwand 5 des Vorratsbehälters 3 elektrisch kontaktiert sind, weisen auch die Partikel 8 eine Potentialdifferenz U relativ zu dem Substrat 2 auf. Wird die Austrittsöffnung 7 innerhalb eines Zeitabschnitts durch den vorprogrammierten Rechner geöffnet, dann werden die Partikel 8 aufgrund der der Schwerkraft und der Coulomb-Kraft, die durch die Potentialdifferenz U hervorgerufen wird in Richtung des Substrats 2 beschleunigt. Sobald ein Partikel 8 das Substrat 2 kontaktiert, baut sich die Potentialdifferenz U des mit dem Substrat 2 kontaktierten Partikels 8 ab und es fließt ein Entladungsstrom zwischen dem Partikel 8 und dem Substrat 2. Der Entladungsstrom führt zu einer Erwärmung des Kontaktpunktes zwischen dem Partikel 8 und dem Substrat 2. Die Hochspannungsquelle ist beispielsweise auf ca. 10000 V eingestellt. Dadurch ist die Erwärmung des Kontaktpunktes zwischen dem Partikel 8 und dem Substrat 2 so groß, dass an dem Kontaktpunkt ein Stoffschluss mittels Entladungsschweißen zustande kommt. Dieser Vorgang wird solange wiederholt, bis eine im Rechner vorprogrammierte zweidimensionale Struktur aus Partikel 8 oder ein dreidimensionales Gebilde aus Partikeln 8 erzeugt ist.

## Patentansprüche

1. Verfahren zum Verbinden von Partikeln (8) mit einem Substrat (2), umfassend die Schritte:
a) Einstellung einer elektrischen Potentialdifferenz U zumindest eines Partikels (8) relativ zu dem Substrat (2),
b) Kontaktierung des zumindest einen Partikels (8) mit dem Substrat, so dass ein Entladungsstrom zu einem Stoffschluss des Partikels (8) mit dem Substrat (2) führt.

2. Verfahren nach Anspruch 1, bei dem so lange ein weiteres Partikel (8) mit dem Substrat (2) einen Stoffschluss eingeht, bis zumindest eine Lage aus Partikeln (8) ausgebildet ist.

3. Verfahren nach Anspruch 1 oder 2, bei dem so lange ein weiteres Partikel (8) mit dem Substrat (2) einen Stoffschluss eingeht, bis eine vordefinierte dreidimensionale Form ausgebildet ist.

4. Verfahren nach einem der Ansprüche 1 bis 3, bei dem das Partikel (8) einen mittleren Durchmesser d von 0,1 µm ≤ *d* ≤ 1000 µm aufweist.

5. Verfahren nach einem der Ansprüche 1 bis 4, bei dem die elektrische Potentialdifferenz U einen Bereich von 100 V ≤ *U* ≤ 100.000 V aufweist.

6. Verfahren nach einem der Ansprüche 1 bis 5, weiterhin umfassend den Schritt:
Erwärmung des zumindest einen Partikels (8) vor der Kontaktierung mit dem Substrat (2).

7. Verfahren nach einem der Ansprüche 1 bis 6, weiterhin umfassend den Schritt:
Variation der Position des zumindest einen Partikels (8) entlang zumindest einer Koordinatenachse.

8. Vorrichtung zur Durchführung eines Verfahrens nach einem der Ansprüche 1 bis 7, umfassend
eine Spannungsquelle (9) mit einer ersten Elektrode zum direkten oder indirekten elektrischen Kontaktieren zumindest eines Partikels (8) und einer zweiten Elektrode (11), die mit einem Substrat (2) kontaktiert ist,
wobei das zumindest eine Partikel (8) eine Potentialdifferenz relativ zu dem Substrat (2) aufweist, und
wobei die Entladung des Partikels (8) bei Kontakt mit dem Substrat (2) zu einem Stoffschluss zwischen dem Partikel (8) und dem Substrat (2) führt.

9. Vorrichtung nach Anspruch 8, **dadurch gekennzeichnet, dass** ein Vorratsbehälter (3) zum Aufnehmen des zumindest einen Partikels (8) vorgesehen ist, und dass die erste Elektrode der Spannungsquelle (9) als zumindest ein Teil einer Innenwand (5) des Vorratsbehälters (3) ausgebildet ist.

10. Vorrichtung nach Anspruch 8 oder 9, weiterhin umfassend eine Heizvorrichtung zur Erwärmung des zumindest einen Partikels (8).
